# EUROPEAN PATENT SPECIFICATION

(11) **EP 2 300 289 B1**
(45) Date of publication and mention of the grant of the patent: **25.01.2012**
(21) Application number: 09784595.2
(22) Date of filing: 03.06.2009
(51) Int. Cl.: B60T 8/88, B60T 13/66, B60T 17/22

(54) **VEHICLE BRAKING SYSTEM**
BREMSSYSTEM FÜR EIN FAHRZEUG
SYSTÈME DE FREINAGE DE VÉHICULE

(30) Priority: 19.07.2008 GB 0813262
(43) Date of publication of application: 30.03.2011
(73) Proprietor: HALDEX BRAKE PRODUCTS LIMITED, Redditch, Worcestershire B98 9HA (GB)
(72) Inventor: HARRISON, Dudley, John, Birmingham B27 7AB (GB)
(74) Representative: Lawson, Alison Christina
(86) International application number: PCT/GB2009/001395
(87) International publication number: WO 2010/010319

(56) References cited:
- EP-A- 1 013 531
- EP-A- 1 016 575
- EP-A- 1 524 163
- EP-A- 1 800 982
- EP-A1- 1 717 121
- EP-A1- 2 060 457
- EP-A2- 1 167 153
- DE-A1- 10 139 757
- US-A1- 2003 195 668
- US-A1- 2005 040 701

## Description

### Description of Invention

The present invention relates to a vehicle braking system, particularly but not exclusively to a braking system for an articulated heavy goods vehicle.

In articulated vehicles including a tractor and a full trailer or semi-trailer, where braking is controlled using an electronic braking system (EBS), it is known to provide the tractor with an electronic control unit (ECU) to control braking of the tractor, and the trailer with a separate electronic control unit to control braking of the trailer. An electronic braking demand signal generated by a driver of the vehicle, for example by actuating a foot pedal, is transmitted to the tractor ECU which determines the required braking force, and transmits appropriate braking signals to brake actuators provided for the wheels of the tractor. The tractor ECU also transmits the braking demand signal to the trailer ECU to enable the trailer ECU to transmit appropriate braking signals to the brake actuators provided for the wheels of the trailer.

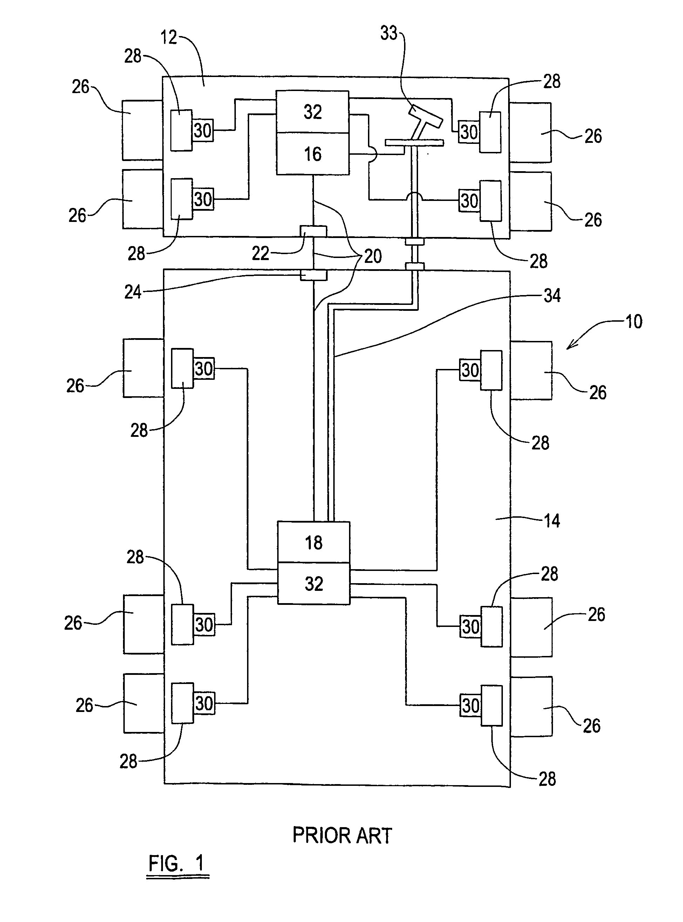

Data transfer between the tractor ECU 16 and the trailer ECU 18 is typically facilitated by means of a CAN bus 20 which is required to comply with the standards of ISO11992. As illustrated in Figure 1, the CAN bus 20 extends from the tractor ECU 16 to a connector 22 provided at the rear of the tractor 12, to a corresponding connector 24 provided at the front of the trailer 14, and finally to the trailer ECU 18. In order to comply with the requirements of ISO11992, the total length of the CAN bus 20 must not be more than 40m, of which no more than 15m is permitted to extend between the tractor ECU 16 and the tractor-mounted connector 22, no more than 7 meters is permitted to extend between the two connectors 22, 24, and no more than 18m is permitted to extend between the trailer-mounted connector 24 and the trailer ECU 18. These constraints are acceptable in most vehicles, but not where the trailer is extendable. It is known to provide trailers which can be extended to up to 50m in length, and in such vehicles, the 18m of CAN bus between the trailer connector 24 and the trailer ECU 18 cannot accommodate the extension of the trailer. This problem can be overcome by disconnecting the CAN bus between the trailer connector 24 and the trailer ECU 18 and operating the trailer brakes using a replacement / back-up pneumatic system. The problem with this is that, when a trailer is extended for example to 40-50m in length, the delay in transmitting a pneumatic signal along the entire length of the trailer can result in significant delay in the application of the trailer brakes compared to when the electronic braking system is used.

EP 1800982 discloses an electronic braking system for an articulated vehicle comprising a tractor and a trailer in which the trailer is provided with a pressure transducer which can be used to generate an electronic braking demand signal if the trailer is connected to a pneumatically braked tractor, or if the tractor electronics fail.

According to a first aspect of the invention we provide a vehicle braking system including an electrical braking control unit having an electrical input for an electrical braking demand signal, the electrical input being electrically connected to an electrical signal transmitting device by means of a bus, the electrical signal transmitting device being a repeater, wherein the system further includes a fluid flow line and a pressure sensor which is connected to an electrical input of the electrical signal transmitting device and is adapted to transmit an electrical pressure signal indicative of the pressure in the fluid flow line to the electrical input of the electrical signal transmitting device, the electrical signal transmitting device being operable to transmit the electrical pressure signal received from the pressure sensor to the electrical braking control unit.

The repeater may have a second input for receipt of an electrical braking demand signal, for example, where the vehicle is a trailer, from the tractor, and be configured to transmit the electrical braking demand signal to the electrical braking control unit via the bus.

The electrical pressure signal is preferably transmitted to the electrical braking control unit via the bus.

A first end of the fluid flow line is preferably connected to a coupling which may provide a substantially fluid tight connection between the fluid flow line and an external fluid flow line, and in this case, the pressure sensor is preferably located in the portion of the fluid flow line adjacent to the coupling. A second end of the fluid flow line is preferably connected to a fluid input of the electrical control unit, the fluid input being provided with a pressure sensor to provide the electrical control unit with an electrical signal indicative of the fluid pressure in the fluid flow line.

According to a second aspect of the invention we provide a trailer vehicle including a braking system according to the first aspect of the invention.

Preferably the electrical signal transmitting device is located at a front end of the trailer vehicle.

Where the first end of the fluid flow line is connected to a coupling, preferably the coupling is provided at a front end of the trailer vehicle.

According to a third aspect of the invention we provide a vehicle including a tractor and a trailer wherein the trailer is provided with a braking system according to the first aspect of the invention.

Preferably the tractor includes an electrical braking control unit which is electrically connected to electrical signal transmitting device.

The tractor may further include a braking demand signal generating device which is operable by a driver of the vehicle to generate an electrical braking demand signal, and which is connected to an input of the electrical braking control unit of the tractor so that the electrical braking demand signal may be transmitted to the electrical braking control unit of the tractor. The braking demand signal generating device may also be connected to a fluid flow line, such that operation of the braking demand signal generating device to generate an electrical braking demand signal causes a fluid pressure braking demand signal to be transmitted along the fluid flow line. In this case, the fluid flow line provided on the tractor is preferably connected to the fluid flow line provided on the trailer.

An embodiment of the invention will now be described with reference to the accompanying drawings of which
FIGURE 1 is a schematic illustration of a prior art vehicle braking system;
FIGURE 2 is a schematic illustration of a vehicle braking system according to the first aspect of the invention; and
FIGURE 3 is a schematic illustration of an alternative configuration of vehicle braking system not forming part of the present invention.

Referring to Figure 1, there is shown an articulated vehicle 10 fitted with a prior art braking system. The vehicle 10 includes a tractor 12 and a trailer 14, the tractor 12 having a main braking electronic control unit (ECU) 16 and the trailer 16 having a main braking electronic control unit (ECU) 18, the two ECUs being connected together by means of a CAN bus 20 and a tractor connector 22 mounted on the rear of the tractor 12 and a trailer connector 24 mounted on the front of the trailer 14. The tractor 12 and trailer 14 are each provided with a plurality of wheels 26 each of which is provided with a brake 28 which is operated by an actuator 30. In this example, the actuators 30 are pneumatically operable, and are therefore connected to a source of pressurised fluid (in this example compressed air) via a modulator 32. Each modulator 32 is electrically operable and receives an electrical signal input from one of the ECUs 16, 18 so that it may control the flow of compressed air to the brake actuators associated with the wheels 26 at one side of the tractor or trailer respectively in response to an electrical braking signal from the respective ECU 16, 18.

The CAN bus 20 is ISO11992 compliant, and the two connectors 22, 24 are standard tractor-trailer connectors which, in this example, fall within the scope of ISO7638. As such, the portion of the CAN bus 20 which extends between the tractor ECU 16 and the tractor-mounted connector 22 is no more than 15m long, the portion of the CAN bus 20 which extends between the tractor-mounted connector 22 and the trailer-mounted connector 24 is no more than 7 long, whilst the portion of the CAN bus which extends between the trailer connector 24 and the trailer ECU 18 is no more than 18m long.

The braking system is operable as follows. A driver of the vehicle 10 generates an electrical braking demand signal, for example by operating a brake pedal 33, and this braking demand signal is transmitted to the tractor ECU 16. The tractor ECU 16 determines the braking force required to be applied to the tractor 12 to achieve the desired braking, and transmits appropriate braking signals to each of the modulators 32 mounted on the tractor 12. The tractor ECU 16 also transmits the braking demand signal along the CAN bus 20 to the trailer ECU 18, and the trailer ECU 18 determines the braking force required to be applied to the trailer brakes to achieve the desired braking, and transmits appropriate braking signals to each of the modulators 32 mounted on the trailer 14.

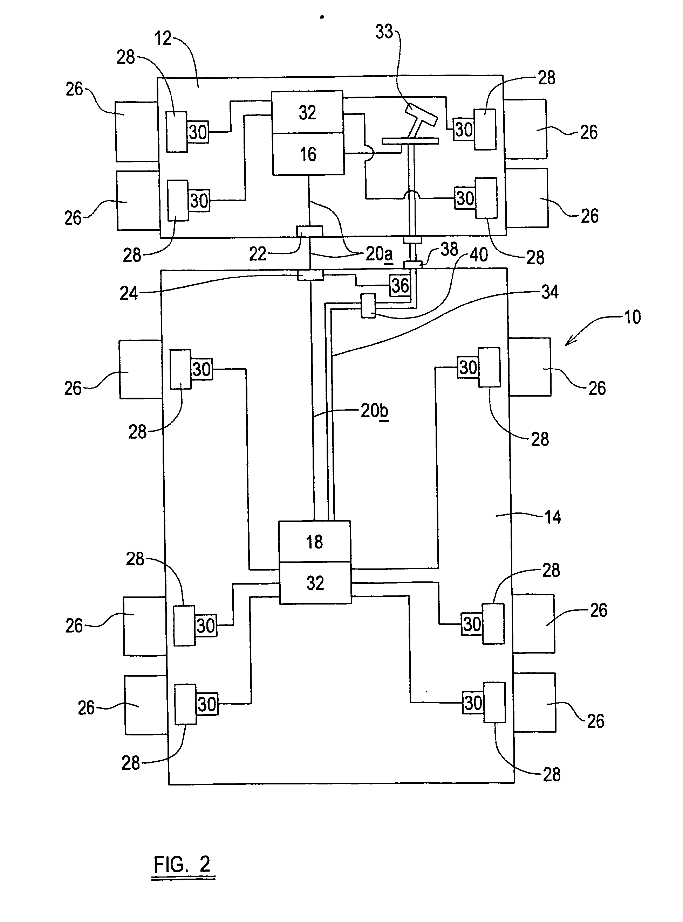

The system is also provided with a pneumatic back-up to enable braking of the trailer in the absence of an electrical braking demand signal from the tractor 12, for example because of an electrical power failure in the tractor 12, because there is a fault in the CAN bus 20 or the connectors 22, 24, or because the tractor EBS is incompatible with the trailer EBS. Operation of the brake pedal also generates a pneumatic braking demand signal which is transmitted along a pneumatic line 34 from the tractor to a pressure input in the trailer ECU 18. The trailer ECU 18 is provided with a pressure transducer which measures the pressure of the pneumatic braking demand signal, and converts it to an electrical braking demand signal, which it then uses to generate appropriate braking signals for transmission to the modulators 32. As already mentioned above, the operation and components of the braking system as described above are all entirely conventional, and the invention lies in aspects of the braking system described below and shown in Figure 2, in particular relating to the CAN bus connection between the two ECUs 16, 18.

Referring to Figure 2, there is shown a schematic illustration of a vehicle 10 having a braking system which is identical to the braking system shown in Figure 1, but instead of being a conventional ISO7638 connector, which acts as a simple junction box, the trailer-mounted connector 24 is a CAN repeater which retransmits any signals received. Since the repeater is therefore the originator of any signal it transmits, the system is now considered to be provided with two CAN buses - the first 20a extending between the tractor ECU 16 and the trailer-mounted connector 24, and the second 20b extending between the trailer-mounted connector 24 and the trailer ECU 18, both of which can be up to 40m long. By virtue of the replacement of the ISO7638 trailer connector with a CAN repeater, electrical control of braking can be maintained even if the system is used on a fully extended extendable trailer.

It should be appreciated that whilst in this example the ISO7638 connector has been replaced by the CAN repeater, the CAN repeater may be provided in addition to the connector 24.

The trailer 14 is also provided with a headboard pressure sensor 36 which measures the pressure in the pneumatic line 34 as close to the front of the trailer (the trailer headboard) as possible. In this example, the headboard pressure sensor 36 is mounted in the pneumatic line 34 between a trailer coupling 38, by means of which the pneumatic line from the tractor 12 is coupled to the trailer 14, and a relay valve 40 which acts to boost the braking demand signal transmitted to the trailer ECU 18. The headboard pressure sensor 36 generates an electrical signal which is indicative of the pressure in the pneumatic line 34, and which therefore constitutes a replacement electrical braking demand signal. The headboard pressure sensor 36 is connected to an electrical input of the CAN repeater forming the trailer-mounted connector 24 and the CAN repeater configured such that the replacement electrical braking demand signal from the pressure sensor 36 can be transmitted to the trailer ECU 18 via the second CAN bus 20b.

The trailer ECU 18 can then treat the electrical braking demand signal generated by the headboard pressure sensor 36 as if it were an electrical braking demand signal transmitted from the tractor 12, and generate the braking signals for transmission to the modulators 32 on the basis of this electrical braking demand signal rather than on the basis of the electrical signal derived from the pneumatic braking demand signal received by the trailer ECU 18 via the pneumatic line 34.

The provision of such a headboard pressure sensor 36 is particularly advantageous because the braking demand signal can be transmitted very quickly to the trailer ECU 18 via the second CAN bus 20b, and without the need to provide any additional wiring. This overcomes the problem of delay in operation of the trailer brakes caused by the length of time the pneumatic braking demand signal takes to travel along the pneumatic line 34 to the trailer ECU 18, particular if the trailer 14 is extended by any significant degree.

It will be appreciated that the invention may equally be applied to other configurations of electrical braking system. For example, each modulator may be connected to a single brake actuator, or to all the brake actuators acting on the wheels on one axle of the tractor or trailer. Advantageously, as is conventional in most, if not all, vehicles fitted with EBS, the ECUs are each connected to at least one wheel speed sensor and are also provide anti-lock braking control, i.e. to provide ABS functionality.

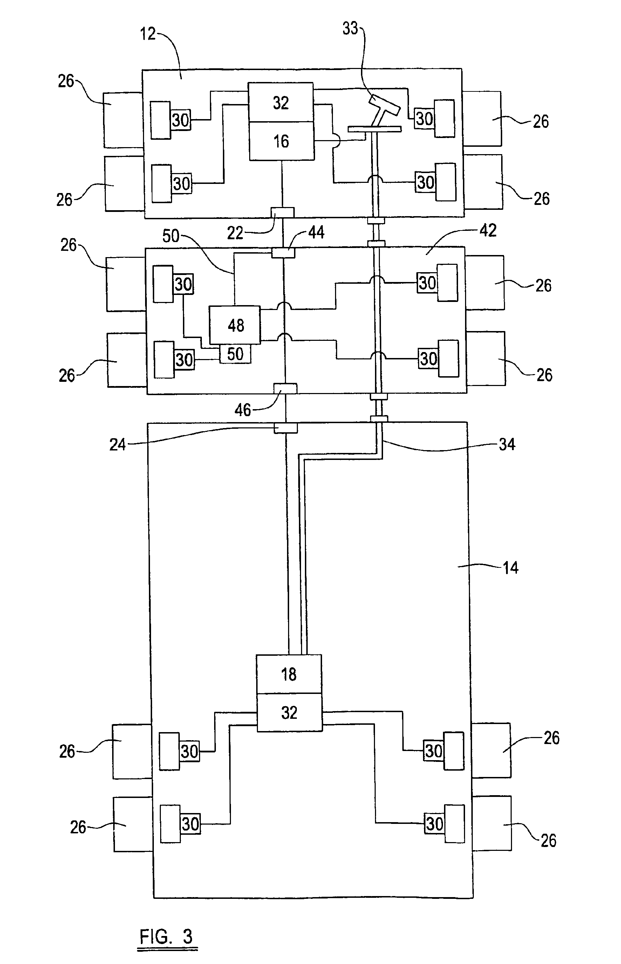

The invention may also be used for tractor and full trailer or tractor and semi-trailer combinations. Where used for a tractor and semi-trailer combination, if the tractor is not configured correctly to support a semi-trailer, a dolly may be provided between the tractor and the semi-trailer - the dolly supporting the semi-trailer and being towed by the tractor. In this case, the system may be configured as shown in Figure 3.

Referring now to Figure 3 there is shown a tractor 12, a semi-trailer 14 and a dolly 42 according to an embodiment not forming part of the present invention. As with the tractor-full trailer system described above, the tractor 12 and semi-trailer 14 are each provided with an electrical braking control unit 16, 18, a modulator 32 and a brake 28, and brake actuator 30 associated with each wheel 26. A brake pedal 33 positioned in a drivers cab of the tractor 12 is connected to the tractor electronic braking control unit 16, and operable to generate and transmit to the tractor electronic braking control unit 18 an electrical braking demand signal which is used to generate a braking signal which is transmitted to the modulator 32.

As before, the tractor electrical braking control unit 16 is connected to the trailer electrical braking control unit 18 using a CAN bus, so that the electrical braking demand signal can be transmitted to the trailer electrical braking control unit. In order to facilitate this connection there is an ISO 7638 compliant connector 22 provided at the rear of the tractor 12, a CAN repeater 44 at the front of the dolly 42, a further ISO 7638 compliant connector 46 at the rear of the dolly 42 and a further ISO 7638 compliant connector 24 provided at the front of the semi-trailer 14. A CAN bus 20 extends from the tractor mounted connector 22 to the CAN repeater 44, on to the rear dolly-mounted connector 46, the trailer-mounted connector 24, and finally the trailer electrical control unit 18. In contrast to the system shown in Figure 2, therefore, it will be appreciated that the CAN repeater is mounted on the dolly 42, rather than on the semi-trailer 14.

In this example, a pneumatic line 34 extends from the brake pedal 33 to the trailer ECU 18 via the dolly 42, and provides means of communicating a pneumatic braking demand signal to the trailer ECU 18 as a back-up to the electrical braking demand signal as discussed above.

The dolly 42 is also provided with an electrical braking control unit 48 and modulator 50, which may control the operation of the brake actuators 30 at each wheel 26 of the dolly 42. The dolly electrical braking control unit 48 is also connected to the CAN repeater 44 via a further CAN bus 50. The CAN bus 20 connecting the CAN repeater 44 to the connector 46 at the rear of the dolly is connected to a first port of the CAN repeater 44, and the CAN bus 50 connecting the CAN repeater 44 to the dolly ECU 48 is connected to a second port of the CAN repeater 44. By virtue of this arrangement, only a single electrical connection between the tractor 12 and the dolly 42 is required in order to supply electrical power, and perhaps also an electrical braking demand signal to the dolly ECU 48.

The second port of the CAN repeater 44 may provide a five pin connection to the dolly electrical braking control unit 48, the five pin connection being used to provide electrical power to the dolly electrical braking control unit 48, and, if desired, ignition on/off and cab-mounted warning lamp signals. In this case, the dolly ECU 48 can provide ABS functionality only and cannot provide a full EBS. The second port of the CAN repeater may, alternatively provide an ISO7638 standard seven pin connection, in which case, the dolly electrical braking control unit 48 may also be supplied with the electrical braking demand signal via this connection, and can function as an EBS unit.

Where the five pin port is used, if the dolly is to be provided with EBS it is necessary for the dolly to receive the pneumatic braking demand signal from the pneumatic line 34, and the dolly ECU 48 to be provided with a pressure transducer to convert the pneumatic signal to an electrical braking demand signal for processing by the ECU 48.

In the Figure 3 arrangement, the semi-trailer 14 could also be provided with a CAN repeater, and a headboard pressure sensor as described in relation to Figure 2 above.

Whilst the connectors described above are ISO7638 compliant, it should be appreciated that this is not essential to the invention, and any other type of connector capable of relaying the required signals may be used.

When used in this specification and claims, the terms "comprises" and "comprising" and variations thereof mean that the specified features, steps or integers are included. The terms are not to be interpreted to exclude the presence of other features, steps or components.

## Claims

1. A vehicle braking system including an electrical braking control unit (18) having an electrical input for an electrical braking demand signal, the electrical input being electrically connected to an electrical signal transmitting device (24) by means of a bus (20b) **characterised in that**, the electrical signal transmitting device (24) is a repeater, wherein the system further includes a fluid flow line (34) and a pressure sensor (36) which is connected to an electrical input of the electrical signal transmitting device (24) and is adapted to transmit an electrical pressure signal indicative of the pressure in the fluid flow line (34) to the electrical input of the electrical signal transmitting device (24), the electrical signal transmitting device (24) being operable to retransmit the electrical pressure signal received from the pressure sensor (36) to the electrical braking control unit (18).

2. A vehicle braking system according to any preceding claim wherein the electrical signal transmitting device (24) has a second input for receipt of an electrical braking demand signal, and is configured to retransmit the electrical braking demand signal to the electrical braking control unit (18).

3. A vehicle braking system according to claim 1 wherein the electrical pressure signal is transmitted to the electrical braking control unit (18) via the bus (20b).

4. A vehicle braking system according to any preceding claim wherein a first end of the fluid flow line (34) is connected to a coupling (38) which may provide a substantially fluid tight connection between the fluid flow line (34) and an external fluid flow line.

5. A vehicle braking system according to claim 4 wherein the pressure sensor (36) is located in the portion of the fluid flow line (34) adjacent to the coupling (38).

6. A vehicle braking system according to claim 4 wherein a second end of the fluid flow line (34) is connected to a fluid input of the electrical control unit (18), the fluid input being provided with a pressure sensor to provide the electrical control unit (18) with an electrical signal indicative of the fluid pressure in the fluid flow line (34).

7. A trailer vehicle (10) including a braking system according to any preceding claim.

8. A trailer vehicle (10) according to claim 7 wherein the electrical signal transmitting device (24) is located at a front end of the trailer vehicle (10).

9. A trailer vehicle (10) according to claim 7 or 8 where dependant on claim 4 wherein the coupling (38) is provided at a front end of the trailer vehicle.

10. A vehicle (10) including a tractor and a trailer wherein the trailer is provided with a braking system according to any one of claims 1 to 6.

11. A vehicle (10) according to claim 10 wherein the tractor includes an electrical braking control unit (16) which is electrically connected to electrical signal transmitting device (24).

12. A vehicle (10) according to claim 10 or 11 wherein the tractor further includes a braking demand signal generating device (33) which is operable by a driver of the vehicle to generate an electrical braking demand signal, and which is connected to an input of the electrical braking control unit (16) of the tractor so that the electrical braking demand signal may be transmitted to the electrical braking control unit (16) of the tractor.

13. A vehicle (10) according to claim 12 wherein the braking demand signal generating device (33) is also connected to a fluid flow line (34), such that operation of the braking demand signal generating device to generate an electrical braking demand signal causes a fluid pressure braking demand signal to be transmitted along the fluid flow line (34).

14. A vehicle (10) according to claim 13 wherein the fluid flow line (34) provided on the tractor is connected to the fluid flow line (34) provided on the trailer.

## Patentansprüche

1. Fahrzeugbremssystem mit einer elektrischen Bremssteuereinheit (18), die eine elektrische Eingabe für ein elektrisches Bremsanforderungssignal aufweist, wobei die elektrische Eingabe mit einer elektrischen Signalübertragungsvorrichtung (24) mittels eines Busses (20) elektrisch verbunden ist, **dadurch gekennzeichnet, dass** die elektrische Signalübertragungsvorrichtung (24) ein Repeater ist, wobei das System weiterhin eine Fluidströmungsleitung (34) und einen Drucksensor (36) einschließt, der mit einer elektrischen Eingabe der elektrischen Signalübertragungsvorrichtung (24) verbunden und dazu ausgelegt ist, ein elektrisches Drucksignal zu übertragen, das den Druck in der Fluidströmungsleitung (34) zur elektrischen Eingabe der elektrischen Signalübertragungsvorrichtung (24) angibt, wobei die elektrische Signalübertragungsvorrichtung (24) dazu funktionsfähig ist, das vom Drucksensor (36) empfangene elektrische Drucksignal zurück zur elektrischen Bremssteuereinheit (18) zu übertragen.

2. Fahrzeugbremssystem nach irgendeinem vorhergehenden Anspruch, wobei die elektrische Signalübertragungsvorrichtung (24) eine zweite Eingabe zum Empfang eines elektrischen Bremsanforderungssignals aufweist und dazu konfiguriert ist, das elektrische Bremsanforderungssignal zurück zur elektrischen Bremssteuereinheit (18) zu übertragen.

3. Fahrzeugbremssystem nach Anspruch 1, wobei das elektrische Drucksignal über den Bus (20b) zur elektrischen Bremssteuereinheit (18) übertragen wird.

4. Fahrzeugbremssystem nach irgendeinem vorhergehenden Anspruch, wobei ein erstes Ende der Fluidströmungsleitung (34) mit einer Kupplung (38) verbunden ist, die eine im Wesentlichen fluiddichte Verbindung zwischen der Fluidströmungsleitung (34) und einer externen Fluidströmungsleitung vorsehen kann.

5. Fahrzeugbremssystem nach Anspruch 4, wobei sich der Drucksensor (36) im Bereich der Fluidströmungsleitung (34) neben der Kupplung (38) befindet.

6. Fahrzeugbremssystem nach Anspruch 4, wobei ein zweites Ende der Fluidströmungsleitung (34) mit einer Fluideingabe der elektrischen Steuereinheit (18) verbunden ist, wobei die Fluideingabe mit einem Drucksensor versehen ist, um die elektrische Steuereinheit (18) mit einem elektrischen Signal zu versehen, das den Fluiddruck in der Fluidströmungsleitung (34) angibt.

7. Anhängerfahrzeug (10) mit einem Bremssystem nach irgendeinem vorhergehenden Anspruch.

8. Anhängerfahrzeug (10) nach Anspruch 7, wobei sich die elektrische Signalübertragungsvorrichtung (24) am vorderen Ende des Anhängerfahrzeugs (10) befindet.

9. Anhängerfahrzeug (10) nach Anspruch 7 oder 8, wenn er von Anspruch 4 abhängt, wobei die Kupplung (38) am vorderen Ende des Anhängerfahrzeugs vorgesehen ist.

10. Fahrzeug (10) mit einer Zugmaschine und einem Anhänger, wobei der Anhänger mit einem Bremssystem nach irgendeinem der Ansprüche 1 bis 6 versehen ist.

11. Fahrzeug (10) nach Anspruch 10, wobei die Zugmaschine eine elektrische Bremssteuereinheit (16) einschließt, die mit der elektrischen Signalübertragungsvorrichtung (24) elektrisch verbunden ist.

12. Fahrzeug (10) nach Anspruch 10 oder 11, wobei die Zugmaschine weiterhin eine Bremsanforderungssignal-Erzeugungsvorrichtung (33) einschließt, die von einem Fahrer des Fahrzeugs betätigt werden kann, um ein elektrisches Bremsanforderungssignal zu erzeugen, und die mit einer Eingabe der elektrischen Bremssteuereinheit (16) der Zugmaschine verbunden ist, so dass das elektrische Bremsanforderungssignal an die elektrische Bremssteuereinheit (16) der Zugmaschine übertragen werden kann.

13. Fahrzeug (10) nach Anspruch 12, wobei die Bremsanforderungssignal-Erzeugungsvorrichtung (33) ebenfalls mit einer Fluidströmungsleitung (34) verbunden ist, so dass der Betrieb der Bremsanforderungssignal-Erzeugungsvorrichtung zum Erzeugen eines elektrischen Bremsanforderungssignals bewirkt, dass ein Fluiddruck-Bremsanforderungssignal entlang der Fluidströmungsleitung (34) übertragen wird.

14. Fahrzeug (10) nach Anspruch 13, wobei die auf der Zugmaschine vorgesehene Fluidströmungsleitung (34) mit der auf dem Anhänger vorgesehenen Fluidströmungsleitung (34) verbunden ist.

## Revendications

1. Un système de freinage de véhicule comprenant une unité de contrôle de freinage électrique (18) ayant une entrée électrique pour un signal de demande de freinage électrique, l'entrée électrique étant électriquement raccordée à un dispositif de transmission de signal électrique (24) au moyen d'un bus (20b), **se caractérisant par le fait que** le dispositif de transmission de signal électrique (24) est un répéteur, le système comprenant en outre une ligne d'écoulement de fluide (34) et un capteur de pression (36) qui est raccordé à une entrée électrique du dispositif de transmission de signal électrique (24) et qui est adapté pour transmettre un signal de pression électrique indicatif de la pression dans la ligne d'écoulement de fluide (34) à l'entrée électrique du dispositif de transmission de signal électrique (24), le dispositif de transmission de signal électrique (24) pouvant être utilisé pour retransmettre le signal de pression électrique reçu du capteur de pression (36) à l'unité de contrôle de freinage électrique (18).

2. Un système de freinage de véhicule selon n'importe laquelle des revendications précédentes, dans lequel le dispositif de transmission de signal électrique (24) possède une deuxième entrée pour la réception d'un signal de demande de freinage électrique et est configuré pour retransmettre le signal de demande de freinage électrique à l'unité de contrôle de freinage électrique (18).

3. Un système de freinage de véhicule selon la revendication 1, dans lequel le signal de pression électrique est transmis à l'unité de contrôle de freinage électrique (18) via le bus (20b).

4. Un système de freinage de véhicule selon n'importe laquelle des revendications précédentes, dans lequel une première extrémité de la ligne d'écoulement de fluide (34) est raccordée à un accouplement (38) pouvant fournir une connexion sensiblement serrée entre la ligne d'écoulement de fluide (34) et une ligne d'écoulement de fluide externe.

5. Un système de freinage de véhicule selon la revendication 4, dans lequel le capteur de pression (36) se trouve dans la partie de la ligne d'écoulement de fluide (34) adjacente à l'accouplement (38).

6. Un système de freinage de véhicule selon la revendication 4, dans lequel une deuxième extrémité de la ligne d'écoulement de fluide (34) est connectée à une entrée de fluide de l'unité de contrôle électrique (18), l'entrée de fluide étant munie d'un capteur de pression afin de fournir à l'unité de contrôle électrique (18) un signal électrique indicatif de la pression du fluide dans la conduite d'écoulement de fluide (34).

7. Un véhicule à remorque (10) équipé d'un système de freinage selon n'importe laquelle des revendications précédentes.

8. Un véhicule à remorque (10) selon la revendication 7, dans lequel le dispositif de transmission de signal électrique (24) se trouve à une extrémité avant du véhicule à remorque (10).

9. Un véhicule à remorque (10) selon la revendication 7 ou 8, dans lequel, selon la revendication 4, l'accouplement (38) se trouve à une extrémité avant du véhicule à remorque.

10. Un véhicule (10) équipé d'un tracteur et d'une remorque, dans lequel la remorque est munie d'un système de freinage conformément à n'importe laquelle des revendications 1 à 6.

11. Un véhicule (10) selon la revendication 10, dans lequel le tracteur comporte une unité de contrôle de freinage électrique (16) électriquement raccordée au dispositif de transmission de signal électrique (24).

12. Un véhicule (10) selon la revendication 10 ou 11, dans lequel le tracteur comporte également un dispositif de génération de signaux de demande de freinage (33) pouvant être utilisé par un conducteur du véhicule pour générer un signal de demande de freinage électrique et qui est connecté à une entrée de l'unité de contrôle de freinage électrique (16) du tracteur de manière telle que le signal de demande de freinage électrique puisse être transmis à l'unité de contrôle de freinage électrique (16) du tracteur.

13. Un véhicule (10) selon la revendication 12, dans lequel le dispositif de génération de signaux de demande de freinage (33) est également connecté à une ligne d'écoulement de fluide (34) de manière telle que l'actionnement du dispositif de génération de signaux de demande de freinage pour générer un signal de demande de freinage électrique déclenche la transmission d'un signal de demande de freinage pour pression de fluide sur la conduite d'écoulement de fluide (34).

14. Un véhicule (10) selon la revendication 13, dans lequel la conduite d'écoulement de fluide (34) du tracteur est connectée à la conduite d'écoulement de fluide (34) de la remorque.
